# FASCICULE DE BREVET EUROPEEN

(11) **EP 0 726 453 B1**
(45) Date de publication et mention de la délivrance du brevet: **29.05.2002**
(21) Numéro de dépôt: 96400234.9
(22) Date de dépôt: 02.02.1996
(51) Int. Cl.: G01N 1/00, G01N 35/04

(54) **Dispositif d'agitation et de prélèvement d'échantillons de produits sanguins dans des tubes regroupés dans des cassettes**
Vorrichtung zum Rühren und Entnehmen von Blutprodukten aus Proberöhrchen die in einen Gestell angeordnet sind
Device for agitation and sampling of blood products grouped in cassettes

(30) Priorité: 07.02.1995 FR 9501397
(43) Date de publication de la demande: 14.08.1996
(73) Titulaire: ABX, 34184 Montpellier Cedex 4 (FR)
(72) Inventeur: Champseix, Henri, F-34980 Montferrier sur Lez (FR); Champseix, Serge, F-34820 Teyran (FR); Le Comte, Roger, F-34280 Carnon (FR); Lefevre, Didier, F-34980 Saint Clement de Rivière (FR)
(74) Mandataire: Bezault, Jean

(56) Documents cités:
- EP-A- 0 557 828
- EP-A- 0 581 984
- WO-A-92/05448
- WO-A-93/25885
- DE-A- 4 117 780
- US-A- 4 921 676

## Description

L'invention se rapporte aux analyseurs hématologiques permettant d'analyser automatiquement des échantillons de produits sanguins.

Elle concerne plus particulièrement un dispositif d'agitation et de prélèvement d'échantillons de produits sanguins dans des tubes obturés par des bouchons et regroupés dans des cassettes.

Avant de prélever un échantillon de produit sanguin dans un tube pour le soumettre à analyse, il est impératif d'agiter le tube pour mélanger les constituants du produit et obtenir ainsi un échantillon dont la composition soit homogène et représentative du produit.

On connaît, d'après US-A-3 231 244, un dispositif automatique de mélange de produits sanguins, qui comprend un tambour rotatif muni de logements propres à maintenir des tubes contenant de tels produits. Les tubes sont disposés radialement par rapport à l'axe de rotation du tambour, en sorte que leurs bouchons respectifs soient dirigés vers l'extérieur. Il s'agit seulement d'un dispositif d'agitation qui présente l'inconvénient que les tubes doivent être chargés manuellement sur le tambour puis extraits manuellement du tambour, une fois l'agitation réalisée.

On trouve également dans le commerce, depuis de nombreuses années, des dispositifs pour agiter des porte-tubes amovibles. Ces porte-tubes ont une configuration en U dans laquelle les tubes sont disposés côte à côte dans des emplacements non prédéfinis et sont maintenus par des moyens élastiques. Il s'agit là encore seulement d'un dispositif d'agitation, dont le principal inconvénient est qu'il nécessite des opérations manuelles, notamment pour le chargement des porte-tubes avant agitation et leur déchargement après agitation.

Par ailleurs, on connaît, d'après EP-A-0 061 317, un dispositif d'agitation et de prélèvement d'échantillons de produits sanguins, dans lequel les tubes contenant les produits sont regroupés dans des cassettes et ces dernières sont disposées manuellement dans un tambour rotatif. Ce dernier a pour fonction d'assurer par rotation le mélange des produits sanguins et d'immobiliser une cassette en position sensiblement verticale pour que les tubes qu'elle contient soient immobilisés avec leurs bouchons vers le bas. Ce dispositif comprend en outre une station de prélèvement déplaçable en translation en dessous du tambour et parallèlement à son axe de rotation, cette station de prélèvement étant munie d'une aiguille de prélèvement propre à prélever un échantillon dans un tube dans une cassette après perçage du bouchon du tube et à effectuer cette opération de prélèvement successivement dans une série de tubes. Après analyse, les cassettes sont extraites manuellement du tambour.

Le principal inconvénient de ce dispositif connu est qu'il ne peut pas faire tourner le tambour, et donc agiter l'ensemble des tubes, pendant l'opération de prélèvement proprement dite. De plus, la station de prélèvement doit effectuer de multiples déplacements en translation, dans les deux sens, ce qui entraîne une usure mécanique. Par ailleurs, comme le prélèvement s'effectue directement dans un tube dans une cassette maintenue immobilisée par le tambour, il faut prévoir des organes mécaniques puissants résistants pour que le tambour reste parfaitement immobilisé notamment lors du perçage du bouchon de chaque tube par l'aiguille de prélèvement.

Il est connu aussi, d'après la publication WO 93/25 885 de la Demanderesse, un dispositif de transfert, d'agitation et de prélèvement d'échantillons de produits sanguins en tubes regroupés dans des cassettes, qui comprend un support rotatif propre à maintenir plusieurs cassettes et à assurer leur mélange par rotation, ainsi qu'une station de prélèvement déplaçable en translation et propre à prélever un échantillon dans un tube d'une cassette lorsque le support est immobilisé.

Ce dispositif présente sensiblement les mêmes inconvénients que ceux mentionnés précédemment, mais il permet par contre une automatisation complète car il comprend des moyens de transfert assurant le chargement automatique des cassettes sur le support rotatif en vue du prélèvement des échantillons et l'éjection automatique des cassettes du support rotatif après prélèvement.

Il est connu par ailleurs, d'après US-A-4 921 676, un dispositif d'agitation et de prélèvement d'échantillons de produits sanguins dans des tubes fermés regroupés dans des cassettes. Ces dernières sont amenées une à une, sans être agitées, en face d'un mécanisme qui prend les tubes contenus dans la cassette individuellement, les retire de la cassette, les agite par rotation partielle avec un angle limité et les conduit à une station de prélèvement munie d'une aiguille, avant de les replacer dans la cassette.

Ce dispositif a pour inconvénient principal de ne pas agiter suffisamment longtemps les produits contenus dans les tubes. De plus, le mécanisme de déplacement des tubes présente une structure et une cinématique particulièrement complexes, donc d'un coût de revient élevé.

Il faut signaler en outre que les dispositifs mentionnés précédemment ont tous pour inconvénient d'offrir des cadences d'analyse qui ne sont pas suffisamment élevées au regard des exigences des laboratoires actuels.

L'invention a en conséquence pour but de surmonter les inconvénients précités en proposant un dispositif d'agitation et de prélèvement qui notamment améliore l'agitation des produits à analyser, autorise de plus grandes cadences de traitement, permet de diminuer l'usure mécanique des pièces et nécessite une puissance motrice plus faible.

L'invention propose à cet effet un dispositif d'agitation et de prélèvement d'échantillons de produits sanguins dans des tubes obturés par des bouchons et regroupés dans des cassettes, du type comprenant un support de cassette propre à maintenir et à agiter au moins une cassette chargée d'au moins un tube ainsi qu'au moins une station de prélèvement propre à percer le bouchon du tube pour prélever l'échantillon.

Selon l'invention, le dispositif comprend des moyens de préhension propres à saisir latéralement et extraire au moins un tube choisi situé dans un emplacement choisi d'une cassette choisie maintenue sur le support; à amener le ou chaque tube choisi, sans l'agiter, jusqu'à la station de prélèvement pour prélever un échantillon, le tube restant maintenu par les moyens de préhension et à replacer le ou chaque tube choisi à son emplacement dans la cassette; ainsi que des moyens d'entraînement pour réaliser un déplacement relatif des moyens de préhension par rapport au tube de la cassette.

Ainsi, le ou chaque tube choisi est extrait de la cassette pour être conduit à la station de prélèvement et être ensuite replacé dans la cassette. Pendant l'opération de prélèvement, le support de cassette peut continuer à agiter les autres tubes qu'il supporte.

Le perçage du bouchon du tube s'effectue à chaque fois sur un tube extrait de la cassette qui reste maintenue par le support de cassette, si bien qu'il n'est plus nécessaire de prévoir des moyens mécaniques de puissance élevée pour maintenir le support en position immobilisée, comme cela était nécessaire auparavant.

Selon une autre caractéristique de l'invention, les moyens d'entraînement sont propres à déplacer les moyens de préhension dans les quatre positions successives suivantes :
- position de repos dans laquelle les moyens de préhension sont éloignés du support de cassette;
- position de prise dans laquelle les moyens de préhension sont proches du ou de chaque tube choisi et sont propres à être actionnés pour saisir le ou chaque tube choisi;
- position de prélèvement dans laquelle les moyens de préhension sont proches de la station de prélèvement pour permettre le prélèvement du ou de chaque tube choisi; et
- position de dépôt dans laquelle les moyens de préhension sont proches du support de cassette et propres à être actionnés pour libérer le ou chaque tube choisi et le replacer dans son emplacement dans la cassette.

Avantageusement, les moyens de préhension comprennent au moins une pince ayant au moins deux mâchoires propres à être rapprochées ou éloignées l'une de l'autre par l'intermédiaire d'un actionneur, par exemple un vérin pneumatique à double effet.

Dans une forme de réalisation préférée de l'invention, les moyens de préhension sont propres à s'approcher du ou de chaque tube choisi pour le saisir dans la cassette et à s'éloigner du ou de chaque tube choisi après dépôt dans la cassette, par des déplacements suivant une direction générale transversale à l'axe du tube. Les moyens de préhension agissent ainsi latéralement par rapport à l'axe du tube.

On prévoit alors avantageusement que les tubes sont maintenus individuellement dans les cassettes par des clips élastiques en U autorisant l'extraction des tubes ou leur remise en place par un déplacement parallèlement à eux-mêmes.

En variante, les déplacements des moyens de préhension pour s'approcher ou s'éloigner du ou de chaque tube choisi peuvent s'effectuer dans l'axe du tube.

De façon avantageuse, les moyens d'entraînement réalisent le déplacement du tube choisi par au moins une translation, en sorte que le tube conserve sensiblement la même orientation spatiale pendant tout son déplacement. Ce déplacement est de préférence réalisé de telle sorte que le bouchon du tube soit tourné vers le bas. Toutefois, en variante, ce déplacement peut être réalisé de telle sorte que le bouchon du tube soit tourné vers le haut.

Dans une forme de réalisation préférée de l'invention, le support de cassette est dans un emplacement fixe d'un analyseur hématologique, tandis que la station de prélèvement est déplaçable dans cet analyseur hématologique, les moyens d'entraînement comprenant des premiers moyens pour déplacer la station de prélèvement en translation suivant une direction généralement parallèle à la direction d'alignement des tubes dans la cassette choisie et l'amener en regard du tube choisi, ainsi que des seconds moyens pour déplacer les moyens de préhension suivant une direction transversale à la direction de déplacement de la station de prélèvement.

En variante, la station de prélèvement est dans un emplacement fixe d'un analyseur hématologique, tandis que le support de cassette est déplaçable dans cet analyseur hématologique, les moyens d'entraînement comprenant des premiers moyens pour déplacer le support de cassette suivant une direction généralement parallèle à la direction d'alignement des tubes dans la cassette ainsi que des seconds moyens pour déplacer les moyens de préhension suivant une direction transversale à la direction de déplacement du support de cassette.

Dans une autre variante, le support de cassette et la station de prélèvement sont tous deux dans des emplacements fixes d'un analyseur hématologique, les moyens d'entraînement étant propres à déplacer les moyens de préhension suivant des mouvements croisés ou orthogonaux.

Dans une forme de réalisation préférée de l'invention, le support de cassette est monté rotatif autour d'un axe et comporte des logements propres à recevoir deux cassettes disposées de part et d'autre de l'axe, en sorte que les tubes d'une cassette sont orientés tête bêche par rapport aux tubes de l'autre cassette.

Selon une autre caractéristique de l'invention, des moyens sont prévus pour immobiliser le support de cassette dans une position d'arrêt, ce qui permet aux moyens de préhension de saisir le ou chaque tube choisi de la cassette choisie avant prélèvement et de le replacer ensuite dans la cassette après prélèvement, les tubes dans la cassette ayant une orientation déterminée.

Avantageusement, cette orientation déterminée est sensiblement verticale et le ou chaque tube choisi a son bouchon dirigé vers le bas.

Selon une autre caractéristique de l'invention, la station de prélèvement comprend une aiguille de prélèvement déplaçable en translation et ayant une pointe propre à percer le bouchon du tube choisi, une première butée propre à former appui pour le bouchon du tube choisi en position de prélèvement, ainsi qu'une seconde butée située en vis-à-vis de la première butée et propre à former appui pour le fond du tube choisi lorsque ce dernier est maintenu en position de prélèvement par les moyens de préhension.

Avantageusement, la seconde butée est réglable pour s'adapter à des tubes de différentes longueurs.

Dans la description qui suit, faite seulement à titre d'exemple, on se réfère aux dessins annexés, sur lesquels :
- la figure 1 est une vue en perspective d'un dispositif selon l'invention en position de repos;
- les figures 2 et 3 sont des vues analogues à celles de la figure 1, le dispositif étant représenté respectivement en position de prise et en position de prélèvement;
- la figure 4 est une vue de dessus des moyens de préhension, respectivement en position de prélèvement et en position de dépôt;
- la figure 5 est une vue latérale du dispositif montrant les moyens de préhension en position de prise d'un tube de grande longueur;
- la figure 6 est une vue analogue à celle de la figure 5, en position de prélèvement;
- les figures 7 et 8 sont des vues partielles analogues à celles de la figure 6, montrant le dispositif en position de prélèvement respectivement pour un tube de longueur moyenne et un tube de longueur courte.

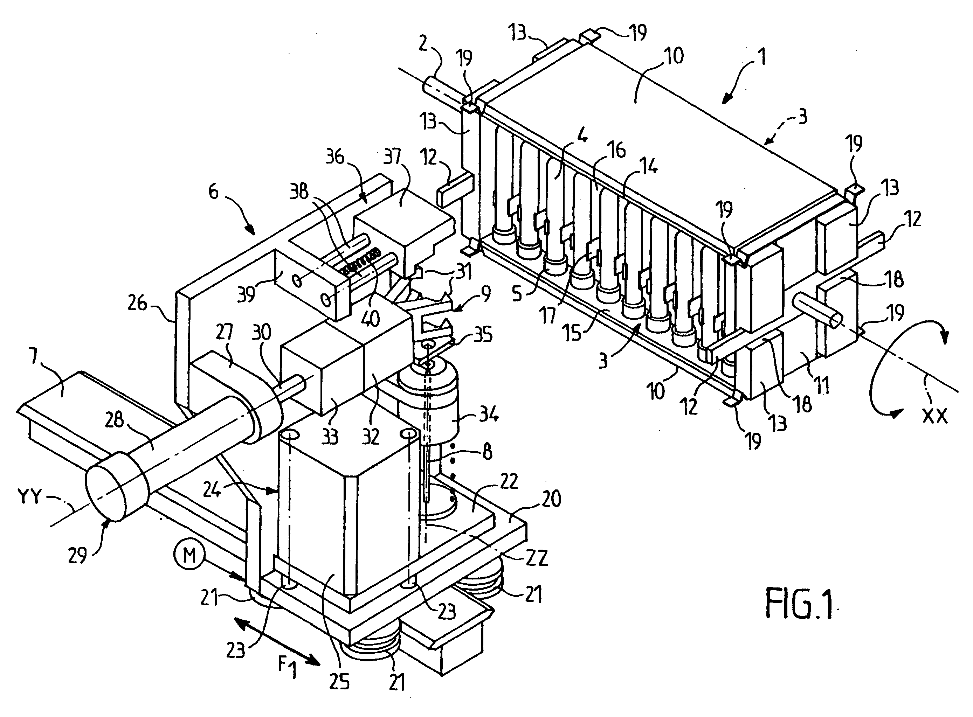

Le dispositif représenté aux figures 1 à 3 comprend un support de cassette 1 monté rotatif autour d'un arbre longitudinal 2 d'axe XX et propre à maintenir deux cassettes 3 (dont une seule est visible sur la figure 1) dans lesquelles sont disposés et alignés côte à côte plusieurs tubes 4, dont chacun contient un produit sanguin et est obturé par un bouchon 5.

Le dispositif comprend en outre une station de prélèvement 6 déplaçable en translation sur une glissière 7 s'étendant parallèlement à l'axe XX et comportant une aiguille de prélèvement 8 déplaçable verticalement et dont la pointe est dirigée vers le haut. La station de prélèvement 6 comporte en outre une pince de préhension 9 déplaçable en translation dans une direction d'axe YY, orthogonalement à l'axe XX, cette pince 9 étant propre à saisir un tube choisi 4 dans l'une des cassettes 3 pour l'amener à la station de prélèvement 6, dans l'axe de l'aiguille 8, afin que cette dernière prélève un échantillon de produit sanguin par perçage du bouchon puis aspiration, et à ramener ensuite le tube 4 à l'emplacement qu'il occupait dans la cassette 3.

Le support 1 comprend essentiellement deux plaques rectangulaires 10 s'étendant parallèlement entre elles et de part et d'autre de l'arbre 2, lesdites plaques étant reliées par deux entretoises d'extrémité 11 solidaires de l'arbre de rotation 2. Les plaques 10 et les entretoises 11 définissent ensemble deux berceaux opposés en forme de U formant logements pour maintenir les deux cassettes 3 en position tête bêche. Dans la position de la figure 1, les tubes 4 de la cassette 3 proche de la station de prélèvement sont dans un même plan sensiblement vertical, les bouchons étant dirigés vers le bas, tandis que les tubes de l'autre cassette 3 sont dans un autre plan sensiblement vertical, parallèle au plan précité, les bouchons des tubes étant dirigés vers le haut. Ainsi, les tubes sont dans une position non radiale par rapport à l'axe XX.

Le support 1 comporte en outre, au niveau de chaque entretoise d'extrémité 11, deux guides 12 s'étendant dans des directions sensiblement parallèles aux plaques 10 et servant au guidage des cassettes 3 lors de leur chargement sur le support 1 ou lors de leur extraction, comme décrit dans la publication WO 93/25 885 déjà citée.

Chacune des cassettes 3 forme un récipient plat qui comprend deux flasques d'extrémité 13 reliés entre eux par deux barrettes 14 et 15 et un fond 16 sur lequel sont montés des clips élastiques 17 en forme de U propres à maintenir des tubes 4 de longueurs et/ou de diamètres différents. Dans l'exemple, chaque cassette peut contenir dix tubes.

Chacun des flasques 13 comprend une découpe 18 pour le passage des guides 12. En outre, le support 1 comprend quatre paires de clips élastiques 19 propres à coopérer avec les flasques 13 des cassettes 3 pour les maintenir immobilisées par rapport au support. Les cassettes 3 peuvent être chargées automatiquement sur le support 1 à partir d'un chargeur (non représenté) disposé au-dessus du support, celui-ci étant dans une position telle que les guides 12 s'étendent verticalement. Les cassettes 3 peuvent être également extraites du support dans une direction sensiblement horizontale lorsque le support occupe la position de la figure 1, la cassette étant extraite vers la droite, c'est-à-dire à l'opposé de la station de prélèvement.

Des moyens permettant le chargement et l'extraction automatique des cassettes sur le support sont également décrits dans la publication WO 93/25 885 déjà citée.

Le support 1 peut être entraîné en rotation autour de son axe XX par un moteur approprié (non représenté) pour lui communiquer un mouvement de rotation complet ou bien des mouvements de rotation alternés, et cela de manière contrôlée, pour agiter les tubes.

La station de prélèvement 6 comprend un socle 20 déplaçable en translation le long de la glissière 7 par l'intermédiaire de galets 21, dans un sens ou dans l'autre, comme montré par la double flèche F1. Le déplacement du socle 20 peut être effectué par tout actionneur approprié, par exemple par un moteur électrique M (non représenté) entraînant en rotation une tige filetée (non représentée) associée à un écrou (non représenté) solidaire du socle 20. L'actionneur est conçu pour déplacer le socle de façon incrémentée pour amener, de façon contrôlée, la pince de préhension 9 au droit d'un tube 4 choisi contenu dans la cassette 3.

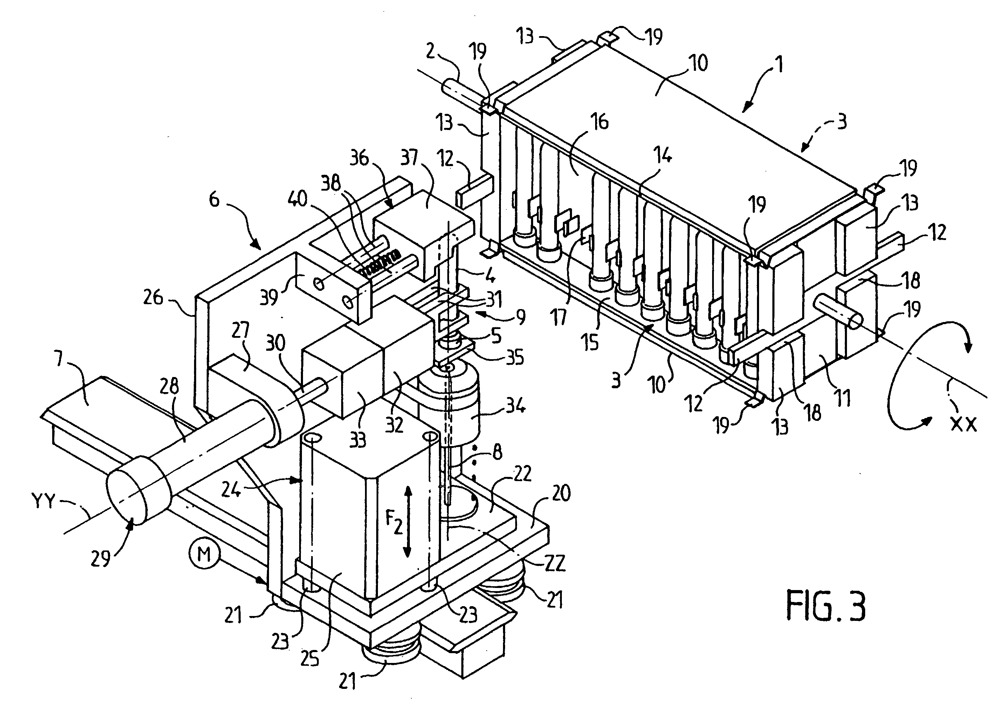

L'aiguille de prélèvement 8 est montée sur une platine 22 propre à coulisser verticalement sur des colonnes de guidage 23, qui s'étendent perpendiculairement au socle 20, sous l'action d'un vérin pneumatique 24 à double effet. Ce vérin 24 comprend un corps 25 monté sur la platine 22 et une tige (non représentée) prenant appui sur le socle 20. Lorsque la tige du vérin est déployée, la platine 22 s'écarte du socle 20 et l'aiguille 8 se déplace verticalement vers le haut. Inversement, lorsque la tige du vérin est rétractée, la platine 22 se rapproche du socle 20 et l'aiguille 8 se déplace verticalement vers le bas. Le déplacement est représenté par la double flèche F2 sur la figure 3.

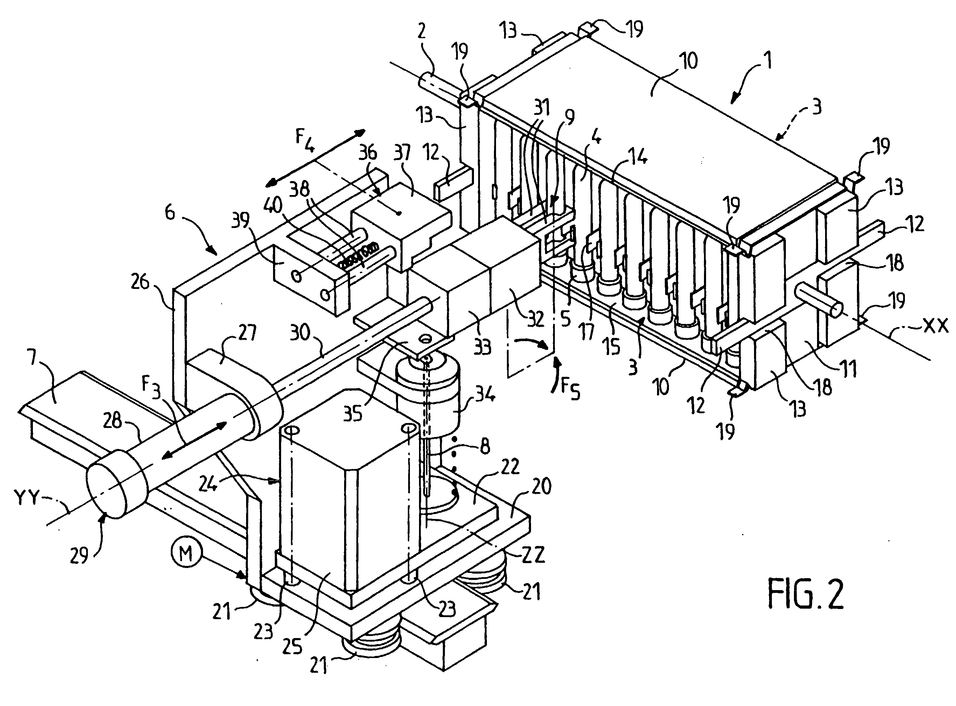

La station de prélèvement 6 comprend en outre une plaque verticale 26 rattachée perpendiculairement au socle 20 et formant support pour différents organes de la station de prélèvement. Sur la plaque 26 est fixée un bride 27 supportant, par son corps 28, un vérin pneumatique à double effet 29 dont la tige 30 porte, à son extrémité libre, la pince de préhension 9. Le vérin 29 permet ainsi de déplacer la pince de préhension dans la direction de l'axe YY dans un sens ou dans l'autre pour déplacer la pince, soit en direction de la cassette 3, soit en direction de la station de prélèvement (double flèche F3 sur la figure 2).

La pince 9 comprend deux mâchoires 31 propres à être rapprochées ou éloignées l'une de l'autre par pivotement autour d'un axe parallèle à la direction des tubes 4. Ces mâchoires 31 sont montées sur un support 32 porté par la tige 30 du vérin et peuvent être rapprochées ou éloignées l'une de l'autre par un actionneur 33 qui, dans l'exemple, est un vérin pneumatique à double effet.

La plaque 26 de la station 6 porte en outre un organe de rinçage 34 servant au nettoyage de l'aiguille de prélèvement 8 après chaque opération de prélèvement.

Par ailleurs, la plaque 26 supporte une première butée fixe 35 propre à former appui pour le bouchon 5 du tube, lorsque ce dernier est maintenu en position de prélèvement dans l'axe de l'aiguille 8 par la pince de préhension 9. La plaque 26 supporte en outre une seconde butée 36 qui est réglable et propre à former appui pour le fond du tube lorsque ce dernier est maintenu dans la position de prélèvement. Cette seconde butée 36 est réglable pour s'adapter automatiquement à la longueur du tube, cette dernière pouvant prendre des valeurs déterminées à l'avance. La seconde butée 36 comprend un bloc en gradins 37 dont la structure sera définie plus loin. Ce bloc 37 est monté coulissant sur deux tiges de guidage 38 qui s'étendent parallèlement à l'axe YY et donc orthogonalement à l'axe XX, ces deux tiges étant supportées par une bride 39 rattachée à la plaque 26. Un ressort élastique de rappel 40 est interposé entre le bloc 37 et la bride 39 de manière à solliciter le bloc 37 en direction du support de cassette. Le bloc 37 est ainsi déplaçable en translation orthogonalement à l'axe XX et dans les deux sens, comme montré par la double flèche F4 sur la figure 2.

Le fonctionnement du dispositif sera maintenant expliqué en référence aux figures 1 à 3. Dans la position de repos de la figure 1, la pince de préhension 9 est rapprochée de la station de prélèvement 6 et ses mâchoires sont ouvertes. La station de prélèvement 6 est ensuite déplacée en translation le long de la glissière 7 par le moteur M (flèche F1), en sorte que l'axe YY de déplacement de la pince se situe au droit du tube 4 de la cassette 3 qui est choisi pour être prélevé. Auparavant, le support de cassette 1 a été entraîné en rotation autour de son axe pour agiter l'ensemble des tubes contenus dans la ou les cassettes.

Après positionnement de la station de prélèvement par rapport à la glissière 7, la tige 30 du vérin 29 est développée pour positionner les mâchoires 31, encore ouvertes, de la pince de préhension 9 autour du tube choisi, le support 1 étant immobilisé. Dans l'exemple, le tube choisi est le troisième tube en partant de la gauche de la série, comme montré à la figure 2. Les deux mâchoires 31 de la pince sont alors rapprochées l'une de l'autre par le vérin 33, comme montré par les flèches F5 à la figure 2. Ainsi, le mouvement d'approche de la pince 9 s'effectue par un déplacement selon une direction générale transversale à l'axe du tube, la préhension du tube s'effectuant par le côté. Pendant tous les déplacements précités, le tube conserve sensiblement la même orientation spatiale avec son bouchon tourné vers le bas.

Les mâchoires 31 de la pince sont réalisées avantageusement dans un matériau souple pour enserrer, sans la briser, la paroi du tube qui est habituellement réalisée en verre.

Ensuite, la tige 30 du vérin 29 est rétractée (flèche F3), ce qui permet d'amener le tube 3 dans la position de prélèvement représentée à la figure 3. Dans cette position, le bouchon 5 du tube 4 est en appui contre la butée fixe 35 et son fond en appui contre la butée réglable 36. Dans cette même position, la tige du vérin 24 est rétractée (flèche F2), l'aiguille de prélèvement 8 étant en position basse. Ensuite, on développe la tige du vérin 24 pour provoquer le déplacement de l'aiguille de prélèvement 8 vers le haut, en sorte que sa pointe perce le bouchon 5 pour permettre le prélèvement d'un échantillon de produit sanguin par des moyens d'aspiration appropriés (non représentés). Sitôt ce prélèvement effectué, l'aiguille de prélèvement 8 est abaissée et la tige du vérin 29 est développée pour déplacer le tube 4 et le déposer dans la cassette à l'emplacement qu'il occupait initialement. La pince de préhension occupe alors une position de dépôt qui correspond à la position de prise de la figure 2. Lors du replacement du tube, le clip 17 s'écarte automatiquement et assure ensuite le maintien du tube en position. La pince est ensuite ramenée vers la position de départ de la figure 1, en sorte que le dispositif peut être soumis à d'autres cycles de fonctionnement semblables. Au début de chaque nouveau cycle, la station de prélèvement 6 est déplacée en translation le long de la glissière 7 pour que la pince de préhension 9 se situe au regard du tube choisi.

Ainsi, les déplacements de la pince de préhension s'effectuent toujours suivant une direction transversale à l'axe du tube, celui-ci étant saisi ou replacé par prise latérale. Il est à noter que pendant le prélèvement proprement dit (figure 3), le support 1 est normalement entraîné en rotation, ce qui permet d'agiter les autres tubes.

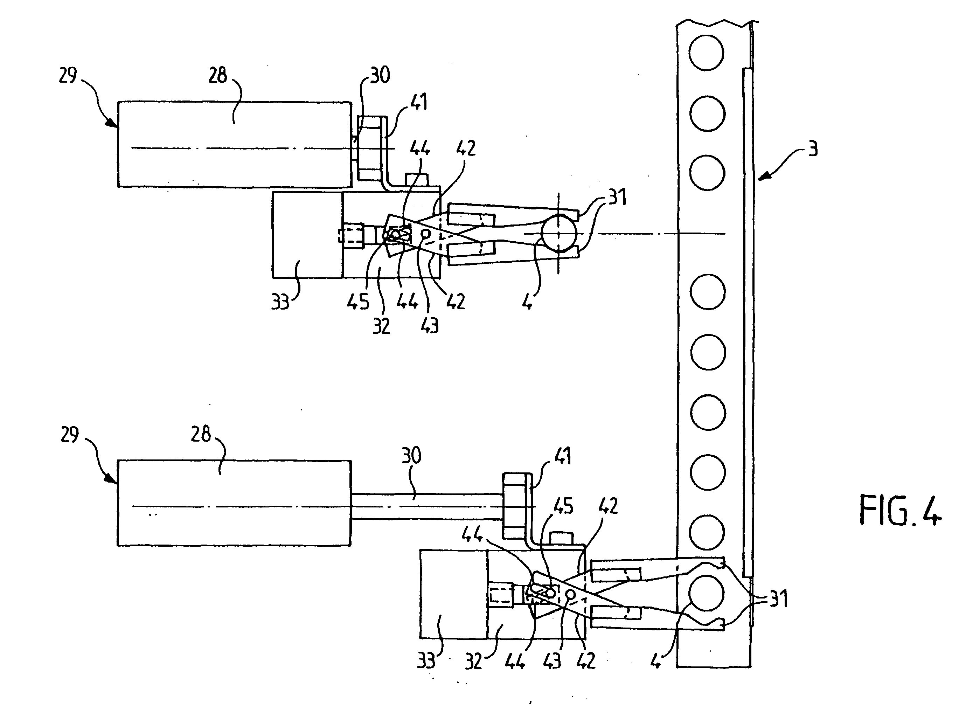

On se réfère maintenant à la figure 4 qui représente une variante de réalisation de la pince de préhension 9. Selon cette variante, le corps 28 du vérin 29 est décalé latéralement par rapport aux mâchoires 31. La tige 30 du vérin 28 est couplée à une équerre 41 qui porte le support 32 sur lequel sont montés, d'un côté l'actionneur 33, et de l'autre côté les deux mâchoires 31 de la pince. Les deux mâchoires 31 sont portées par deux leviers croisés 42 montés pivotants autour d'un pivot commun 43 et ayant des boutonnières respectives 44 traversées par un plot 45 monté transversalement à l'extrémité de la tige de l'actionneur 33. Lorsque cette tige est rétractée, les deux pinces sont rapprochées (voir partie supérieure de la figure 4), et lorsque la tige est déployée, les deux mâchoires sont écartées (partie inférieure de la figure 4).

Dans la partie supérieure de la figure 4, les deux mâchoires de la pince maintiennent le quatrième tube d'une série de dix tubes dans la position de prélèvement. Dans la partie inférieure de la figure 4, les deux mâchoires 31 sont écartées et sont prêtes à saisir le dixième tube de cette série de dix tubes.

Lorsque tous les tubes d'une cassette ont été extraits de celle-ci et ont été prélevés, le support de cassette est tourné de 180° pour amener l'autre cassette en regard de la station de prélèvement, les bouchons des tubes de cette autre cassette se trouvant automatiquement dirigés vers le bas. La station de prélèvement et la pince de préhension peuvent être à nouveau actionnées pour effectuer des opérations analogues sur les tubes de la seconde cassette.

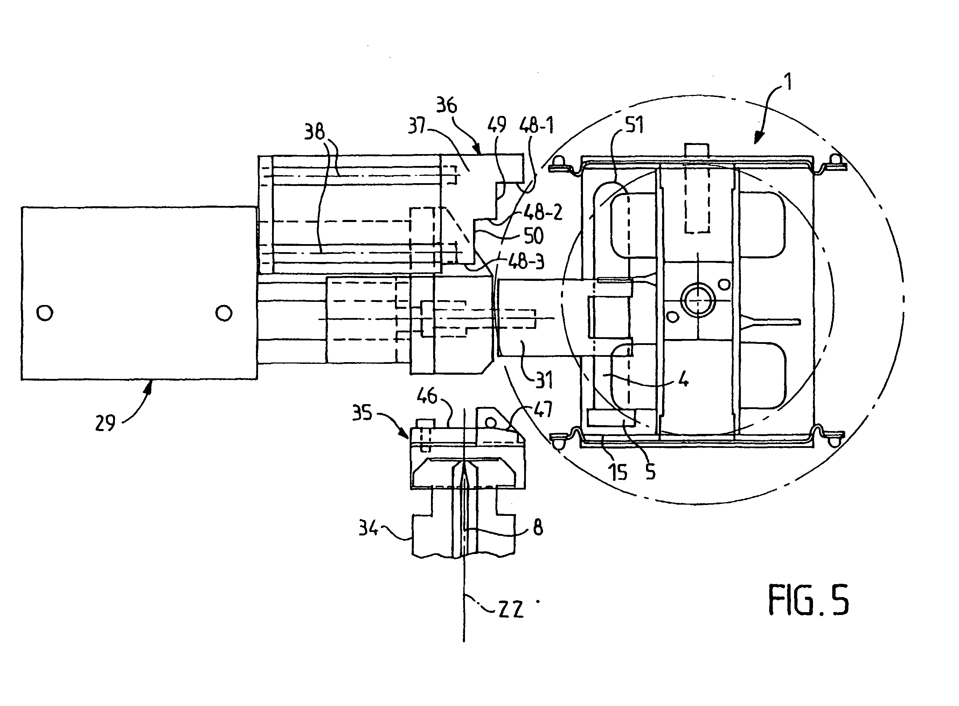

On se réfère maintenant à la figure 5. La butée fixe 35 comporte une surface d'appui 46 qui s'étend perpendiculairement à l'axe ZZ de déplacement de l'aiguille 8 et qui peut être traversée par cette dernière. Cette surface 46 se poursuit latéralement, du côté du support de cassette, par une rampe 47 qui facilite le guidage du bouchon 5 du tube, à mesure que ce dernier se rapproche de la position de prélèvement, en laquelle l'axe du tube est aligné avec l'axe ZZ de l'aiguille 8. Il est à noter que, dans la cassette 3, les tubes des bouchons 5 viennent toujours reposer sur la barrette 15, quels que soient le diamètre et la longueur des tubes, pour fournir un repère de positionnement.

Le bloc en gradins 37 de la butée réglable 36 est conçu pour s'adapter automatiquement à des tubes de longueurs différentes de valeur donnée, dans l'exemple trois longueurs de tubes : une longueur L1 (tubes longs), une longueur L2 (tubes moyens) et une longueur L3 (tubes courts). Le bloc en gradins 37 comporte à cet effet trois surfaces d'appui 48-1, 48-2 et 48-3 qui présentent à la fois un décalage longitudinal (parallèlement à la direction de translation ZZ de l'aiguille de prélèvement) et un décalage latéral (perpendiculairement à la direction de translation ZZ de l'aiguille). Les trois surfaces d'appui 48-1, 48-2 et 48-3 forment une sorte d'escalier et sont reliées entre elles par des parois transversales 49 et 50. La distance qui sépare le plan de la surface d'appui 46 aux plans respectifs des surfaces d'appui 48-1, 48-2 et 48-3, correspond respectivement aux longueurs L1, L2 et L3 (bouchons compris).

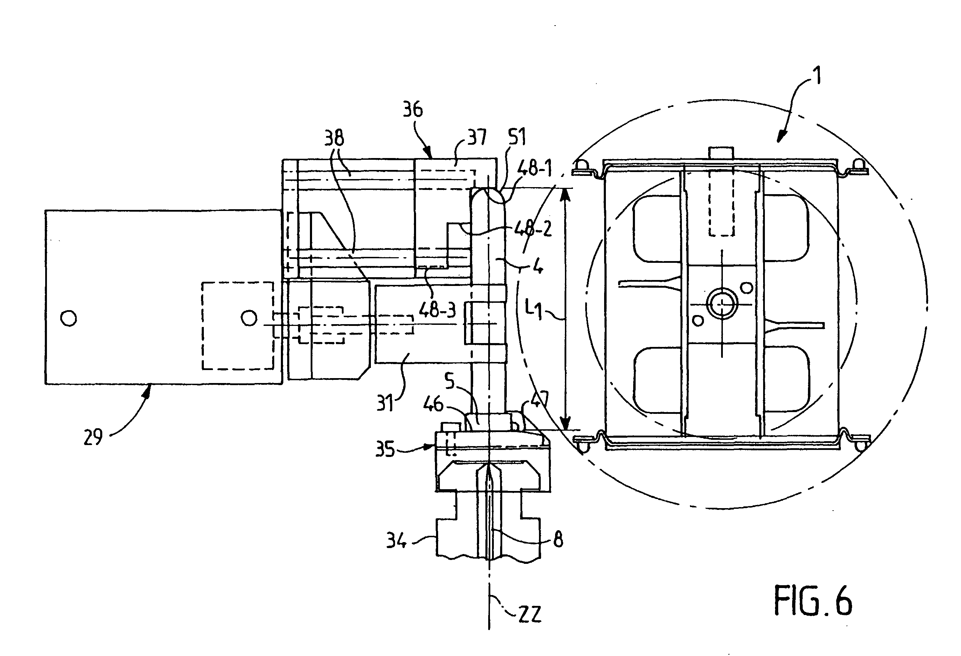

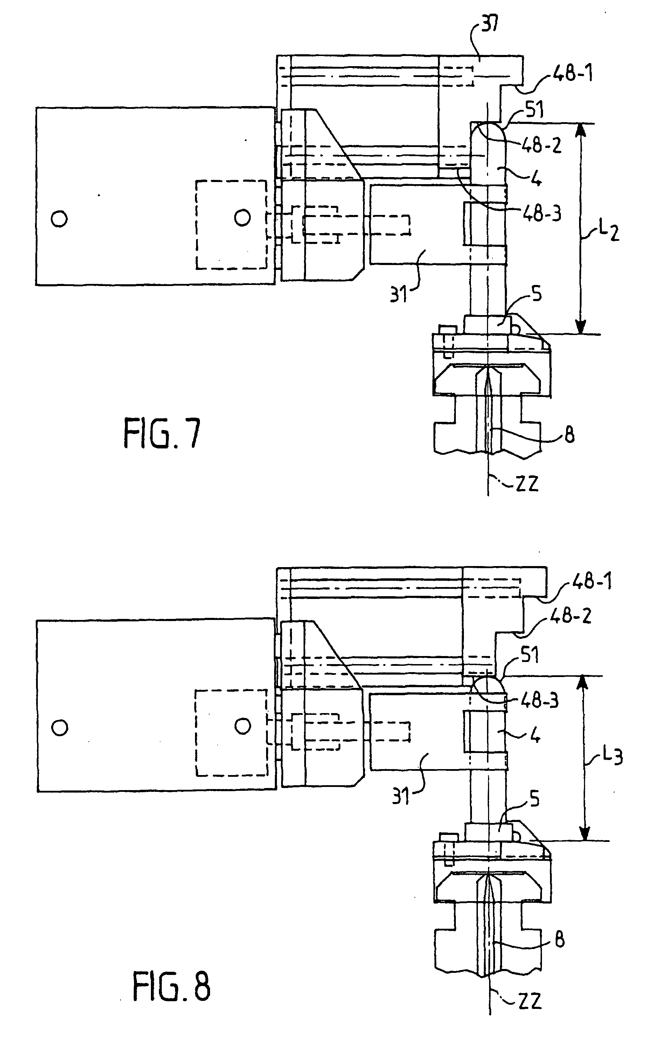

Lorsqu'aucun tube est en position de prélèvement, la surface d'appui 48-3 correspondant aux tubes courts, se situe dans l'axe de déplacement ZZ de l'aiguille de prélèvement (figure 5). Dans l'exemple, la pince de préhension 9 saisit un tube 5 de longueur L1 (figure 5) pour le déplacer vers la position de prélèvement (figure 6). Au cours de ce déplacement, le fond 51 du tube 20 vient appuyer latéralement contre la surface transversale 49 du bloc 37 et déplacer ainsi ce bloc, à l'encontre de la force du ressort 40, jusqu'à ce que la surface d'appui 48-1 se situe dans l'axe de l'aiguille de prélèvement. Si l'on utilise un tube moyen de longueur L2, le fond du tube vient, au cours du déplacement, appuyer contre la surface transversale 50 et amener la surface d'appui 48-2 dans le prolongement de l'axe de déplacement ZZ de l'aiguille (figure 7).

Dans le cas où la pince de préhension 9 saisit un tube court de longueur L3, le fond du tube vient se glisser sous la surface d'appui 48-3 du bloc 37, celui-ci n'étant ainsi pas déplacé.

Le dispositif de l'invention permet une meilleure agitation des produits sanguins du fait que le support de cassette peut être entraîné en mouvement, avant, pendant et après les opérations de prélèvement. Il doit seulement être immobilisé temporairement lorsque les moyens de préhension viennent saisir un tube dans une cassette en vue de son prélèvement, et lorsqu'ils viennent ensuite le replacer dans la cassette, une fois le prélèvement effectué.

Par ailleurs, il n'est pas nécessaire de prévoir de moyens mécaniques puissants pour immobiliser temporairement le support de cassette, du fait que le prélèvement des tubes s'effectue, non pas dans la cassette maintenue sur le support, mais hors de la cassette.

L'invention n'est pas limitée aux formes de réalisation décrites précédemment à titre d'exemple. Ainsi, les moyens de préhension peuvent comporter une ou plusieurs pinces de préhension pour saisir un ou plusieurs tubes à la fois dans une cassette.

Le support de cassette n'est pas obligatoirement un support monté à rotation autour d'un axe. Il peut s'agir d'un autre type de support assurant l'agitation des échantillons par basculement, retournement, ou encore rotation des tubes sur eux-mêmes.

Bien que l'on préfère que les tubes soient orientés avec leurs bouchons vers le bas pour le prélèvement, cette disposition n'est pas obligatoire, et il peut être envisagé que les tubes soient dirigés avec leurs bouchons vers le haut, l'aiguille de prélèvement étant alors située au-dessus du bouchon dans la position de prélèvement.

Il est à noter que les moyens d'actionnement assurant le déplacement des moyens de préhension par rapport au support et à la station de prélèvement ne sont pas non plus limités à la forme de réalisation décrite précédemment.

En variante, le support de cassette et la station de prélèvement peuvent être tous deux situés dans des emplacements fixes d'un analyseur hématologique, les moyens d'entraînement assurant alors le déplacement des moyens de préhension suivant des mouvements croisés ou orthogonaux.

Dans une autre variante, la station de prélèvement est dans un emplacement fixe d'un analyseur hématologique, tandis que le support de cassette est déplaçable dans cet analyseur hématologique, les moyens d'entraînement comprenant alors des premiers moyens pour déplacer le support de cassette suivant une direction généralement parallèle à la direction d'alignement des tubes dans les cassettes et des seconds moyens pour déplacer les moyens de préhension suivant une direction transversale à la direction de déplacement du support de cassette.

Les moyens de préhension peuvent s'approcher ou s'éloigner du ou de chaque tube choisi par un déplacement s'effectuant dans l'axe du tube et non transversalement à cet axe, comme dans la forme de réalisation décrite à titre d'exemple.

Il est envisageable également, dans le cas où le support de cassette est adapté pour recevoir une seule cassette, que les moyens de préhension traversent la cassette pour prendre un ou plusieurs tubes au passage et les amener à la station de prélèvement.

Quelle que soit la forme de réalisation choisie, les moyens d'actionnement peuvent être pilotés par un automate programmable ou tout autre moyen approprié.

Le dispositif de l'invention peut avantageusement être combiné à des moyens de transfert automatique pour charger les cassettes dans le support avant prélèvement et les extraire ensuite du support après prélèvement, comme enseigné par exemple dans la publication WO 93/25 885 déjà citée.

Le dispositif de l'invention trouve ainsi une application aux analyseurs hématologiques, tels que ceux utilisés dans les laboratoires, les échantillons prélevés étant ensuite mis au contact de réactifs appropriés à des fins d'analyse.

## Revendications

1. Dispositif d'agitation et de prélèvement d'échantillons de produits sanguins dans des tubes (4) obturés par des bouchons (5) et regroupés dans des cassettes (3), comprenant un support de cassette (1) propre à maintenir et agiter au moins une cassette (3) chargée d'au moins un tube (4), ainsi qu'au moins une station de prélèvement (6) propre à percer le bouchon du tube pour prélever l'échantillon,
**caractérisé en ce qu'**il comprend des moyens de préhension (9) propres à saisir latéralement et extraire au moins un tube choisi (4) situé dans un emplacement choisi d'une cassette choisie (3), maintenue sur le support (1); à amener le ou chaque tube choisi (4), sans l'agiter, jusqu'à la station de prélèvement (6) pour prélever un échantillon, le tube restant maintenu par les moyens de préhension, et à replacer le ou chaque tube choisi (4) à son emplacement dans la cassette, ainsi que des moyens d'entraînement (M, 29) pour réaliser un déplacement relatif des moyens de préhension (9) par rapport au tube (4) de la cassette (3).

2. Dispositif selon la revendication 1, **caractérisé en ce que** les moyens d'entraînement (M, 29) sont propres à déplacer les moyens de préhension (9) dans les quatre positions successives suivantes :
- position de repos dans laquelle les moyens de préhension (9) sont éloignés du support de cassette (1);
- position de prise dans laquelle les moyens de préhension (9) sont proches du ou de chaque tube choisi (4) et sont propres à être actionnés pour saisir le ou chaque tube choisi;
- position de prélèvement dans laquelle les moyens de préhension (9) sont proches de la station de prélèvement (6) pour permettre le prélèvement du ou de chaque tube choisi (4); et
- position de dépôt dans laquelle les moyens de préhension (9) sont proches du support de cassette (1) et actionnés pour libérer le ou chaque tube choisi (4) et le replacer dans la cassette (3).

3. Dispositif selon l'une des revendications 1 et 2, **caractérisé en ce que** les moyens de préhension comprennent au moins une pince (9) ayant au moins deux mâchoires (31) propres à être rapprochées ou éloignées l'une de l'autre par l'intermédiaire d'un actionneur (33).

4. Dispositif selon la revendication 3, **caractérisé en ce que** l'actionneur (33) est un vérin pneumatique à double effet.

5. Dispositif selon l'une des revendications 1 à 4, **caractérisé en ce que** les moyens de préhension (9) sont propres à s'approcher du ou de chaque tube choisi (4) pour le saisir dans la cassette (3) et à s'éloigner du ou de chaque tube choisi après dépôt dans la cassette, par des déplacements suivant une direction générale transversale à l'axe du tube.

6. Dispositif selon l'une des revendications 1 à 5, **caractérisé en ce que** les tubes (4) sont maintenus individuellement dans les cassettes (3) par des clips élastiques (17) en U autorisant l'extraction des tubes ou leur remise en place par un déplacement parallèle à eux-mêmes.

7. Dispositif selon l'une des revendications 1 à 4, **caractérisé en ce que** les moyens de préhension (9) sont propres à s'approcher du ou de chaque tube choisi (4) pour le saisir dans la cassette (3) et à s'éloigner du ou de chaque tube choisi (4) après dépôt dans la cassette, par des déplacements s'effectuant dans l'axe du tube.

8. Dispositif selon l'une des revendications 1 à 7, **caractérisé en ce que** les moyens d'entraînement (M, 29) déplacent le tube choisi (4) par au moins une translation, en sorte que le tube conserve sensiblement la même orientation spatiale pendant tout son déplacement.

9. Dispositif selon la revendication 8, **caractérisé en ce que** les moyens d'entraînement (M, 29) déplacent le ou chaque tube choisi (4), de telle sorte que son bouchon (5) soit tourné vers le bas.

10. Dispositif selon la revendication 8, **caractérisé en ce que** les moyens d'entraînement (M, 29) déplacent le ou chaque tube choisi (4), de telle sorte que son bouchon (5) soit tourné vers le haut.

11. Dispositif selon l'une des revendications 1 à 10, **caractérisé en ce que** le support de cassette (1) est dans un emplacement fixe, tandis que la station de prélèvement (6) est déplaçable, et **en ce que** les moyens d'entraînement comprennent des premiers moyens (M) pour déplacer la station de prélèvement (6) en translation suivant une direction généralement parallèle à la direction d'alignement des tubes (4) dans la cassette choisie (3) et l'amener en regard du tube choisi, et des seconds moyens (29) pour déplacer les moyens de préhension (9) suivant une direction transversale à la direction de déplacement de la station de prélèvement (6).

12. Dispositif selon la revendication 11, **caractérisé en ce que** la station de prélèvement (6) est guidée en translation sur une glissière (7) et **en ce que** les premiers moyens comprennent un actionneur tel qu'un moteur pas à pas (M).

13. Dispositif selon l'une des revendications 11 et 12, **caractérisé en ce que** les seconds moyens comprennent un vérin pneumatique (29) à double effet.

14. Dispositif selon l'une des revendications 1 à 10, **caractérisé en ce que** la station de prélèvement (6) est dans un emplacement fixe, tandis que le support de cassette (1) est déplaçable, et **en ce que** les moyens d'entraînement comprennent des premiers moyens pour déplacer le support de cassette (1) suivant une direction générale parallèle à la direction d'alignement des tubes dans la cassette et des seconds moyens pour déplacer les moyens de préhension (9) suivant une direction transversale à la direction de déplacement du support de cassette (1).

15. Dispositif selon l'une des revendications 1 à 10 **caractérisé en ce que** le support de cassette (1) et la station de prélèvement (6) sont tous deux dans des emplacements fixes, et **en ce que** les moyens d'entraînement sont propres à déplacer les moyens de préhension (9) suivant des mouvements croisés ou orthogonaux.

16. Dispositif selon l'une des revendications 1 à 15, **caractérisé en ce que** des moyens sont prévus pour immobiliser le support de cassette (1) dans une position d'arrêt, ce qui permet aux moyens de préhension (9) de saisir le ou chaque tube choisi de la cassette choisie avant prélèvement et de le replacer ensuite dans la cassette après prélèvement, les tubes (4) dans la cassette ayant une orientation déterminée.

17. Dispositif selon la revendication 16, **caractérisé en ce que**, dans la position d'arrêt du support de cassette (1), le ou chaque tube de la cassette choisie a une orientation sensiblement verticale.

18. Dispositif selon l'une des revendications 1 à 17, **caractérisé en ce que** la station de prélèvement (6) comprend une aiguille de prélèvement (8) déplaçable en translation et ayant une pointe propre à percer le bouchon (5) du tube choisi, une première butée (35) propre à former appui pour le bouchon (5) du tube en position de prélèvement, ainsi qu'une seconde butée (36) située en vis-à-vis de la première butée et propre à former appui pour le fond (51) du tube choisi, lorsque ce dernier est maintenu en position de prélèvement par les moyens de préhension.

19. Dispositif selon la revendication 18, **caractérisé en ce que** la seconde butée (36) est réglable pour s'adapter à la longueur (L1, L2, L3) du tube choisi, qui est en cours de prélèvement.

20. Dispositif selon la revendication 19, **caractérisé en ce que** la seconde butée (36) comprend un bloc en gradins (37) comportant des surfaces d'appui (48-1, 48-2 et 48-3) présentant un décalage longitudinal parallèlement à la direction de translation (ZZ) de l'aiguille de prélèvement (8) et un décalage latéral perpendiculairement à cette direction de translation de l'aiguille, le décalage longitudinal permettant aux surfaces d'appui (48-1, 48-2 et 48-3) de s'adapter à des tubes de différentes longueurs (L1, L2, L3).

21. Dispositif selon la revendication 20, **caractérisé en ce qu'**un ressort de rappel (40) exerce sur le bloc en gradins (37) une force élastique dirigée transversalement à la direction de translation (ZZ) de l'aiguille de prélèvement (8) et dans la direction du support de cassette (1), en sorte que la surface d'appui (48-3) qui est la plus proche de la surface d'appui (35) et qui correspond au tube de plus faible longueur (L3) soit située dans l'axe (ZZ) de l'aiguille de prélèvement (8).

22. Dispositif selon l'une des revendications 20 et 21, **caractérisé en ce que** le bloc en gradins (37) comporte trois surfaces d'appui (48-1, 48-2 et 48-3) dont les distances respectives par rapport à la première butée (35) correspondent à trois longueurs de tubes (L1, L2, L3).

## Claims

1. Device for agitating and sampling blood products in tubes (4) closed by stoppers (5) and grouped together in cassettes (3), comprising a cassette support (1) capable of holding and agitating at least one cassette (3) loaded with at least one tube (4) and at least one sampling station (6) capable of piercing the stopper of the tube to take the sample, **characterized in that** it comprises gripper means (9) capable of grasping laterally and extracting at least one chosen tube (4) situated in a chosen location of a chosen cassette (3) held on the support (1); of bringing the or each chosen tube (4), without agitating it, to the sampling station (6) for taking a sample, the tube remaining held by the gripper means, and of putting the or each chosen tube (4) back in its location in the cassette, and drive means (M, 29) for effecting a relative displacement of the gripper means (9) with respect to the tube (4) of the cassette (3).

2. Device according to Claim 1, **characterized in that** the drive means (M, 29) are capable of displacing the gripper means (9) into the following four successive positions:
- a position of rest in which the gripper means (9) are away from the cassette support (1);
- a gripping position in which the gripper means (9) are near the or each chosen tube (4) and are able to be actuated in order to grasp the or each chosen tube;
- a sampling position in which the gripper means (9) are near the sampling station (6) to allow the sample to be taken from the or each chosen tube (4); and
- a depositing position in which the gripper means (9) are near the cassette support (1) and actuated to release the or each chosen tube (4) and put it back in the cassette (3).

3. Device according to either of Claims 1 and 2, **characterized in that** the gripper means comprise at least one gripper (9) having at least two jaws (31) which can be brought together or moved apart via an actuator (33).

4. Device according to Claim 3, **characterized in that** the actuator (33) is a double-acting pneumatic ram.

5. Device according to one of Claims 1 to 4, **characterized in that** the gripper means (9) are capable of moving closer to the or each chosen tube (4) to grasp it from the cassette (3) and of moving away from the or each chosen tube after depositing it in the cassette, in displacements in a general direction transverse to the axis of the tube.

6. Device according to one of Claims 1 to 5, **characterized in that** the tubes (4) are held individually in the cassettes (3) by U-shaped elastic clips (17) allowing the tubes to be extracted or returned through a displacement parallel to themselves.

7. Device according to one of Claims 1 to 4, **characterized in that** the gripper means (9) are capable of moving closer to the or each chosen tube (4) to grasp it from the cassette (3) and of moving away from the or each chosen tube (4) after depositing it in the cassette, through displacements along the axis of the tube.

8. Device according to one of Claims 1 to 7, **characterized in that** the drive means (M, 29) displace the chosen tube (4) in at least one translation, so that the tube maintains roughly the same spatial orientation throughout its displacement.

9. Device according to Claim 8, **characterized in that** the drive means (M, 29) displace the or each chosen tube (4) in such a way that its stopper (5) faces downwards.

10. Device according to Claim 8, **characterized in that** the drive means (M, 29) displace the or each chosen tube (4) in such a way that its stopper (5) faces upwards.

11. Device according to one of Claims 1 to 10, **characterized in that** the cassette support (1) is at a fixed location, while the sampling station (6) is displaceable, and **in that** the drive means comprise first means (M) for displacing the sampling station (6) in translation in a direction generally parallel to the direction of alignment of the tubes (4) in the chosen cassette (3) and bringing it to face the chosen tube, and second means (29) for displacing the gripper means (9) in a direction transverse to the direction of displacement of the sampling station (6).

12. Device according to Claim 11, **characterized in that** the sampling station (6) is guided in translation on a slideway (7) and **in that** the first means comprise an actuator such as a stepper motor (M).

13. Device according to one of Claims 11 and 12, **characterized in that** the second means comprise a double-acting pneumatic ram (29).

14. Device according to one of Claims 1 to 10, **characterized in that** the sampling station (6) is at a fixed location, while the cassette support (1) is displaceable, and **in that** the drive means comprise first means for displacing the cassette support (1) in a direction generally parallel to the direction of alignment of the tubes in the cassette and second means for displacing the gripper means (9) in a direction transverse to the direction of displacement of the cassette support (1).

15. Device according to one of Claims 1 to 10, **characterized in that** the cassette support (1) and the sampling station (6) are both at fixed locations, and **in that** the drive means are able to displace the gripper means (9) with crossed or orthogonal motions.

16. Device according to one of Claims 1 to 15, **characterized in that** means are provided for immobilizing the cassette support (1) in a stationary position, which allows the gripper means (9) to grasp the or each chosen tube from the chosen cassette before sampling and to then put it back in the cassette after sampling, the tubes (4) in the cassette having a determined orientation.

17. Device according to Claim 16, **characterized in that**, in the stationary position of the cassette support (1), the or each tube of the chosen cassette has a roughly vertical orientation.

18. Device according to one of Claims 1 to 17, **characterized in that** the sampling station (6) comprises a sampling needle (8) that can be displaced in translation and has a tip capable of piercing the stopper (5) of the chosen tube, a first buffer (13) capable of forming a rest for the stopper (5) of the tube in the sampling position, and a second buffer (36) situated facing the first buffer and capable of forming a rest for the bottom (51) of the chosen tube, when the latter is held in the sampling position by the gripper means.

19. Device according to Claim 18, **characterized in that** the second buffer (36) is adjustable so that it can be adapted to suit the length (L1, L2, L3) of the chosen tube, which is being sampled.

20. Device according to Claim 19, **characterized in that** the second buffer (36) comprises a stepped block (37) comprising resting surfaces (48-1, 48-2 and 48-3) which are longitudinally offset parallel to the direction of translation (ZZ) of the sampling needle (8) and are laterally offset at right angles to this direction of translation of the needle, the longitudinal offset allowing the resting surfaces (48-1, 48-2 and 48-3) to suit tubes of different lengths (L1, L2, L3).

21. Device according to Claim 20, **characterized in that** a return spring (40) exerts on the stepped block (37) an elastic force directed transversely to the direction of translation (ZZ) of the sampling needle (8) and in the direction of the cassette support (1) so that the resting surface (48-3) which is closest to the resting surface (35) and which corresponds to the shortest tube (L3) lies along the axis (ZZ) of the sampling needle (8).

22. Device according to either of Claims 20 and 21, **characterized in that** the stepped block (37) comprises three resting surfaces (48-1, 48-2 and 48-3) whose respective distances from the first buffer (35) correspond to three tube lengths (L1, L2, L3).

## Patentansprüche

1. Vorrichtung zum Hin- und Herbewegen und zur Entnahme von Proben von Blutprodukten in Röhrchen (4), die durch Stopfen (5) verschlossen und in Kassetten (3) zusammengefasst sind, wobei die Vorrichtung einen Kassettenträger (1), der geeignet ist, mindestens eine Kassette (3) zu halten und hin- und herzubewegen, die mit mindestens einem Röhrchen (4) beladen ist, sowie mindestens eine Probenentnahmestation (6) aufweist, die geeignet ist, den Stopfen des Röhrchens zu durchbohren, um die Probe zu entnehmen,
**dadurch gekennzeichnet, dass**
sie Greifmittel (9) aufweist, die geeignet sind, mindestens ein ausgewähltes Röhrchen (4) seitlich zu ergreifen und herauszuziehen, das sich an einer ausgewählten Stelle einer ausgewählten Kassette (3) befindet, die an dem Träger (1) festgehalten wird; wobei die Greifmittel (9) geeignet sind, das oder ein jedes ausgewähltes Röhrchen (4), ohne es hin- und herzubewegen, der Probenentnahmestation (6) zuführen, um eine Probe zu entnehmen, wobei das Röhrchen durch die Greifmittel festgehalten bleibt, und das oder ein jedes ausgewähltes Röhrchen (4) in seiner Stelle in der Kassette zu ersetzen, sowie Antriebsmittel (M, 29) aufweist, um eine relative Verlagerung der Greifmittel (9) bezogen auf das Röhrchen (4) der Kassette (3) auszuführen.

2. Vorrichtung nach Anspruch 1,
**dadurch gekennzeichnet, dass**
die Antriebsmittel (M, 29) geeignet sind, die Greifmittel (9) nacheinander in folgende vier Positionen zu verlagern:
- Ruheposition, in der die Greifmittel (9) vom Kassettenträger (1) entfernt sind;
- Greifposition, in der die Greifmittel (9) dem oder einem jeden ausgewählten Röhrchen (4) nahe sind und geeignet sind, hin- und herbewegt zu werden, um das oder ein jedes ausgewähltes Röhrchen zu ergreifen;
- Entnahmeposition, in der die Greifmittel (9) der Probenentnahmestation (6) nahe sind, um die Entnahme des ausgewählten oder eines jeden ausgewählten Röhrchens (4) zu gestatten; und
- Ablageposition, in der die Greifmittel (9) nahe des Kassettenträgers (1) sind und hin- und herbewegt werden, um das oder ein jedes ausgewähltes Röhrchen (4) freizugeben und es in der Kassette (3) zu ersetzen.

3. Vorrichtung nach Anspruch 1 oder 2,
**dadurch gekennzeichnet, dass**
die Greifmittel mindestens eine Zange (9) aufweisen, die mindestens zwei Backen (31) aufweist, die geeignet sind, mittels eines Betätigungsgeräts (33) einander angenähert oder voneinander entfernt zu werden.

4. Vorrichtung nach Anspruch 3,
**dadurch gekennzeichnet, dass**
das Betätigungsgerät (33) einen Pneumatikzylinder mit Doppelwirkung ist.

5. Vorrichtung nach einem der Ansprüche 1 bis 4,
**dadurch gekennzeichnet, dass**
die Greifmittel (9) geeignet sind, sich dem oder einem jeden ausgewählten Röhrchen (4) zu nähern, um es in der Kassette (3) zu ergreifen und um sich von dem oder von einem jeden ausgewählten Röhrchen nach der Ablage in der Kassette durch Verlagerungen in einer Richtung zu entfernen, die zur Achse des Röhrchens im wesentlichen quer verläuft.

6. Vorrichtung nach einem der Ansprüche 1 bis 5,
**dadurch gekennzeichnet, dass**
die Röhrchen (4) einzeln in den Kassetten (3) durch elastische Clips (17) in U-Form festgehalten werden, die das Herausziehen der Röhrchen und ihr Zurückstellen durch eine Verlagerung gestatten, die parallel zu ihnen selbst verläuft.

7. Vorrichtung nach einem der Ansprüche 1 bis 4,
**dadurch gekennzeichnet, dass**
die Greifmittel (9) geeignet sind, sich dem oder einem jeden ausgewählten Röhrchen (4) zu nähern, um es in der Kassette (3) zu ergreifen, und um sich von dem oder einem jeden ausgewählten Röhrchen (4) nach Ablage in der Kassette durch Verlagerungen zu entfernen, die in der Achse des Röhrchens erfolgen.

8. Vorrichtung nach einem der Ansprüche 1 bis 7,
**dadurch gekennzeichnet, dass**
die Antriebsmittel (M, 29) das ausgewählte Röhrchen (4) durch mindestens eine Translationsbewegung derart verlagern, dass das Röhrchen im wesentlichen dieselbe räumliche Orientierung während seiner gesamten Verlagerung beibehält.

9. Vorrichtung nach Anspruch 8,
**dadurch gekennzeichnet, dass**
die Antriebsmittel (M, 29) das ausgewählte oder ein jedes ausgewähltes Röhrchen (4) derart verlagern, dass sein Stopfen (5) nach unten gedreht wird.

10. Vorrichtung nach Anspruch 8,
**dadurch gekennzeichnet, dass**
die Antriebsmittel (M, 29) das oder ein jedes ausgewähltes Röhrchen (4) derart verlagern, dass sein Stopfen (5) nach oben gedreht wird.

11. Vorrichtung nach einem der Ansprüche 1 bis 10,
**dadurch gekennzeichnet, dass**
der Kassettenträger (1) in einer festem Standort ist, während die Probenentnahmestation (6) verschiebbar ist, und dass die Antriebsmittel erste Mittel (M) aufweisen, um die Probenentnahmestation (6) in Translationsbewegung in einer Richtung zu verlagern, die im wesentlichen parallel zur Ausrichtungsrichtung der Röhrchen (4) in der ausgewählten Kassette (3) verläuft und um sie dem ausgewählten Röhrchen zuzuführen, und zweite Mittel (29), um die Greifmittel (9) in einer Richtung zu verlagern, die quer zur Verlagerungsrichtung der Probenentnahmestation (6) verläuft.

12. Vorrichtung nach Anspruch 11,
**dadurch gekennzeichnet, dass**
die Probenentnahmestation (6) in Translation auf einer Gleitschiene (7) geführt wird und dass die ersten Mittel ein Betätigungsgerät wie einen Schrittschaltmotor (M) aufweisen.

13. Vorrichtung nach Anspruch 11 oder 12,
**dadurch gekennzeichnet, dass**
die zweiten Mittel einen Pneumatikzylinder (29) mit Doppelwirkung aufweisen.

14. Vorrichtung nach einem der Ansprüche 1 bis 10,
**dadurch gekennzeichnet, dass**
die Probenentnahmestation (6) in einem festen Standort ist, während der Kassettenträger (1) verschiebbar ist, und dass die Antriebsmittel erste Mittel aufweisen, um den Kassettenträger (1) in einer Richtung zu verlagern, die im wesentlichen parallel zur Ausrichtungsrichtung der Röhrchen in der Kassette verläuft und zweite Mittel aufweisen, um die Greifmittel (9) in einer Richtung zu verlagern, die quer zur Verlagerungsrichtung des Kassettenträgers (1) verläuft.

15. Vorrichtung nach einem der Ansprüche 1 bis 10,
**dadurch gekennzeichnet, dass**
der Kassettenträger (1) und die Probenentnahmestation (6) alle beide in festen Standorten sind und dass die Antriebsmittel geeignet sind, die Greifmittel (9) in Kreuzbewegungen oder orthogonalen Bewegungen zu verlagern.

16. Vorrichtung nach einem der Ansprüche 1 bis 15,
**dadurch gekennzeichnet, dass**
Mittel vorgesehen sind, um den Kassettenträger (1) in einer Ruhestellung festzusetzen, was den Greifmitteln (9) gestattet, das ausgewählte oder ein jedes ausgewähltes Röhrchen aus der ausgewählten Kassette vor der Entnahme zu ergreifen und es anschließend in der Kassette nach der Entnahme zu ersetzen, wobei die Röhrchen (4) in der Kassette eine bestimmte Orientierung haben.

17. Vorrichtung nach Anspruch 16,
**dadurch gekennzeichnet, dass**
in der Ruhestellung des Kassettenträgers (1) das ausgewählte oder ein jedes ausgewähltes Röhrchen der ausgewählten Kassette eine im wesentlichen vertikale Orientierung hat.

18. Vorrichtung nach einem der Ansprüche 1 bis 17,
**dadurch gekennzeichnet, dass**
die Probeentnahmestation (6) eine Entnahmenadel (8) aufweist, die in Translation verschiebbar ist und eine Spitze hat, die geeignet ist, den Stopfen (5) des ausgewählten Röhrchens zu durchbohren, wobei die Probeentnahmestation (6) einen ersten Anschlag (35) aufweist, der geeignet ist, für den Stopfen (5) des Röhrchens in Entnahmeposition eine Auflage zu bilden, sowie einen zweiten Anschlag (36) aufweist, der gegenüber dem ersten Anschlag gelegen und geeignet ist, für den Boden (51) des ausgewählten Röhrchens eine Auflage zu bilden, wenn dieses Letztgenannte durch die Greifmittel in Entnahmeposition gehalten wird.

19. Vorrichtung nach Anspruch 18,
**dadurch gekennzeichnet, dass**
der zweite Anschlag (36) regelbar ist, um sich an die Länge (L1, L2, L3) des ausgewählten Röhrchens anzupassen, aus dem die Probe entnommen wird.

20. Vorrichtung nach Anspruch 19,
**dadurch gekennzeichnet, dass**
der zweite Anschlag (36) einen Stufenspannblock (37) aufweist, der Anlageflächen (48-1, 48-2 und 48-3) aufweist, die eine Längsverschiebung parallel zur Translationsrichtung (ZZ) der Entnahmenadel (8) und eine seitliche Verschiebung senkrecht zu dieser Translationsrichtung der Nadel zeigen, wobei die Längsverschiebung den Anlageflächen (48-1, 48-2 und 48-3) gestattet, sich an Röhrchen verschiedener Länge (L1, L2, L3) anzupassen.

21. Vorrichtung nach Anspruch 20,
**dadurch gekennzeichnet, dass**
eine Spannfeder (40) auf den Stufenspannblock (37) eine Federkraft ausübt, die quer zur Translationsrichtung (ZZ) der Entnahmenadel (8) und in die Richtung des Kassettenträgers (1) derart gerichtet ist, dass die Anlagefläche (48-3), welche die nächste zur Anlagefläche (35) ist und die dem Röhrchen einer geringsten Länge (L3) entspricht, in der Achse (ZZ) der Entnahmenadel (8) liegt.

22. Vorrichtung nach Anspruch 20 oder 21,
**dadurch gekennzeichnet, dass**
der Stufenspannblock (37) drei Anlageflächen (48-1, 48-2 und 48-3) aufweist, deren jeweilige Abstände bezogen auf den ersten Anschlag (35) drei Röhrchenlängen (L1, L2, L3) entsprechen.
